(19) Europäisches Patentamt
European Patent Office
Office européen des brevets

(11) **EP 2 655 872 B1**

(12) **EUROPEAN PATENT SPECIFICATION**

(45) Date of publication and mention
of the grant of the patent:
**15.05.2019 Bulletin 2019/20**

(21) Application number: **11819118.8**

(22) Date of filing: **22.12.2011**

(51) Int Cl.:
**F03D 1/04** (2006.01)    **F03D 80/00** (2016.01)

(86) International application number:
**PCT/IT2011/000412**

(87) International publication number:
**WO 2012/085955 (28.06.2012 Gazette 2012/26)**

(54) **WIND MACHINE WITH AERODYNAMIC ELEMENTS TO CONCENTRATE AND ACCELERATE AN AEOLIAN FLOW ENTERING FROM OUTSIDE**

WINDKRAFTANLAGE MIT AERODYNAMISCHEN ELEMENTEN ZUR KONZENTRATION UND BESCHLEUNIGUNG EINES VON AUSSEN EINTRETENDEN WINDSTROMS

ÉOLIENNE À ÉLÉMENTS AÉRODYNAMIQUES POUR CONCENTRER ET ACCÉLÉRER UN COURANT D'AIR ENTRANT DANS L'ÉOLIENNE DEPUIS L'EXTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2010 IT RM20100686**

(43) Date of publication of application:
**30.10.2013 Bulletin 2013/44**

(73) Proprietor: **Biagini, Livio**
**60026 Numana (AN) (IT)**

(72) Inventor: **Biagini, Livio**
**60026 Numana (AN) (IT)**

(74) Representative: **Santi, Filippo et al**
**Barzanò & Zanardo Roma S.p.A.**
**Via Piemonte 26**
**00187 Roma (IT)**

(56) References cited:
**EP-A1- 1 916 415        US-A1- 2005 019 151**
**US-A1- 2007 277 501**

**Description**

The present invention relates to a wind machine with aerodynamic elements to concentrate and accelerate an Aeolian flow entering from outside. US2007/0277501 A1 discloses for example an apparatus for introducing a fluid through an intake into a convergent-divergent stream duct adapted for accelerating the fluid.

As it is well known, wind power plays an always more relevant role among renewable energies that can be exploited.

At present, technology is almost exclusively addressed to direct exploitation of speed of flows within an Aeolian field of the zone where the wing machine is placed.

Being power that can be collected within "Aeolian field" obtained from Betz formula

$$E = 1/2 \, \varrho \, A \, v^3 \, (\beta \times t),$$

wherein, $\varrho$ is air density given as $Kg/m^3$, an area wiped by passing rotor blades given in $m^2$ of wind flow, v is velocity of flow given in m/sec, $\beta$ is Betz coefficient ($\beta$ that can be really obtained is = 0.4), and t is time.

From the above formula, it is well evident that higher are the parameters A, v and t, and higher is collected power.

Due to technological reasons, it is aimed keeping v factor low, within a range of 9 - 15 m/sec, and since the use is direct, said velocity are present only in mountain sites, throats and in open sea.

V parameter acts on parameter A; recently, rotors have been realised with more than 120 m of diameter, thus obliging realising Wind machines with total dimensions of more than 100 m height, and Aeolian apparatus provided at a height of more than 50 m from ground, with unavoidable difficulties for realising, assembling and maintaining at such big height, high costs for realising roads and for distributing energy produced, besides requiring necessary investments. Furthermore, a remarkable environmental impact is caused.

Parameter t is only a function of natural factors.

From the above, it is understood that known solutions are characterised by some disadvantages:

-   nominal Aeolian field used for Wind machines having acceptable dimensions is included with the range 10 m/sec - 13 m/sec. Exceptionally, for Wind machines having a large front dimension, it can be lower up to about 8 m/sec, worsening cost - advantages balance. For small Wind machines, nominal positive Aeolian field is included within the range between 12 and 15 m/sec. All the above Aeolian fields are located in inconvenient zones (mountain ridges or hill zones/plain zones only in Northern areas).

-   duration of above wind intensity is limited to a fraction of the total of hours available within a year (1 year = 8760 hours). Said fraction depends on geographical position (in Italy for example only on ridges of few mountain zones from Apennines to south, duration is about 1/8 of total hours/year), thus only for 1070 hours per year.

-   realisation of known Wind machines is very expensive, both due to rotor dimensions, which are at the higher value. To increase parameter A, rotor are presently realised with a diameter larger than 100 m (a= area - 100 = 7850 $m^2$).

-   rotor has its rotation axis at the end of a tower that, in case rotor has a diameter of 100 m, height of insertion of rotor rotation axis is at least 70 m, thus total dimension being at least 120 m from ground level. Resisting structure must be calculated to bear wind stresses, rotor thrust, and earthquakes.

Moreover, visual impact, danger for maintenance and repair (with masses of 15/20 tons of nacelle - rotor group containing rotor axis, electric generator assembly, sensor assembly for orienteering mechanism making rotor rotating about tower, ecc.

The above, without ignoring other disadvantages, such as difficulty of conveying energy generated to main supply, necessity of realising roads (to access large Wind machines), and foundations necessary for tower.

In view of the above, it is an object of the present invention is that of realising a wind machine permitting using Aeolian fields with low wind speed (about 5 m/sec), i.e. Aeolian fields that can be found in many zones all over the world, and that are characterised by a duration of the wind much longer (from 4 to 5 times) than above mentioned Aeolian fields, with a total number of hours per year of about 5400 hour per year.

Another object of the present invention, is that of realising a wind machine having reduced dimensions (about 75% less than traditional wind machines), thus reducing environmental impact, risks for birds, risk deriving from earthquakes, maintenance and repair risks sine the electric flow generator assembly and all the electronics are at the ground level.

Still another object of the present invention is that of providing a wind machine that can be used in many different fields, such as fields wherein said technology has never been used, e.g. automotive, nautical, or road and highway fields.

These and other results are obtained, according to the present invention, by a wind machine provided with a housing, having reduced dimensions in function of the results to be obtained, about and within which ducts, converging and diverging wing profiles, ecc. are contained, as well as rotor or other wind device suitable to collect natural or, at the beginning, forced wind power, exploiting different elementary motions of fluid dynamic and not only rectilinear motion, as in the known solutions.

Housing of the solution according to the present invention not only is a simple container, but rather a complex interaction system, wherein air flow act, which are differentiated into vector and scalar values, determining results in which velocity field and earth gravity field values intervene. Substantially, it can be said that housing system as described in the above defines possibility of collecting kinematic energy $1/2 lv^3 A$, as well as "earth gravity field" energy, using the well known formula:

$$V = \sqrt{\frac{2\Delta\rho}{l}}$$

Wherein, v is velocity of flow induced by pressure difference $\Delta p = P_{atm} - P_{static}$, according to inducing flow direction, is physical vehicle by which earth gravity energy acting on air molecules (all about the earth) is present. To give an intuitive connection, it can be imagined operation of the energetic transformation, making a comparison with transformation occurring into hydroelectric power plants: water collection basin at level h and an $\Delta$h of "gravity field" potential, wherein v is flow velocity of forced ducts and physical vehicle to exploit gravity energy.

It is therefore a specific object of the present invention a wind machine with aerodynamic elements to concentrate and accelerate an Aeolian flow entering from outside, said machine being characterized in that it is provided with a housing, with an air intake, a first section converging up to an element having a substantially spherical or cylindrical section, a second and a third section, downstream said first converging section, each one touching said element having a substantially spherical or cylindrical section substantially up to its median line, e first and a second auxiliary air intake, in correspondence of said median line of said element having a substantially spherical or cylindrical section, said element having a substantially linear portion, downstream said first and second air intake, a fourth and a fifth section, each one substantially reproducing profile of said second and third sections, a third auxiliary air intake being provided in correspondence of said fourth and a fifth sections; and a diverging channel, at the outlet of which a device exploiting said Aeolian flow is provided.

Preferably, according to the invention, said Aeolian flow entering through said main air intake is a natural flow, the wind machine being provided with means for orienteering with respect to the Aeolian flow direction, or an artificial source.

Furthermore, according to the invention, sequence of sections and of auxiliary air intakes between said converging section and said diverging section can be provided, in series, more than once.

Always according to the invention, said device exploiting the Aeolian flow can be a device provided with blades, or another kind of wind device with a horizontal or vertical axis.

Still according to the invention, said machine provides circular wings, in its front section, said wings having a suitable wing profile, with a positive or negative leading angle, causing a perturbation of "wind field", curving the flow lines.

Furthermore, according to the invention, to reduce friction loss between molecules of air flow flowing within circular channels, it is possible reducing, or eliminating, wing after the first wing, in order to reduce contact area and limit layer causing friction and, exploiting natural curvature of "Aeolian field" flow lines of perturbation elements, behaviour of flow lines, i.e. their centre concentration would be similar to a fixed wall, without resistance losses.

Present invention will be described in the following for illustrative, but not limitative, purposes, with particular reference to its preferred embodiments, making particular reference to the figures of the enclosed drawings, wherein:

    figure 1 is a section view of a wind machine according to the invention;
    figure 2 shows a particular of housing of figure 1;

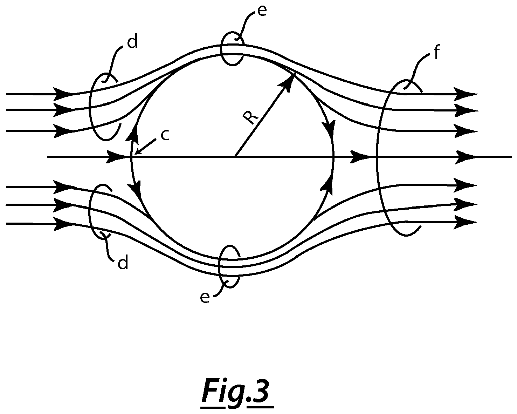

    figure 3 schematically shows the flow of a fluid about a sphere; and

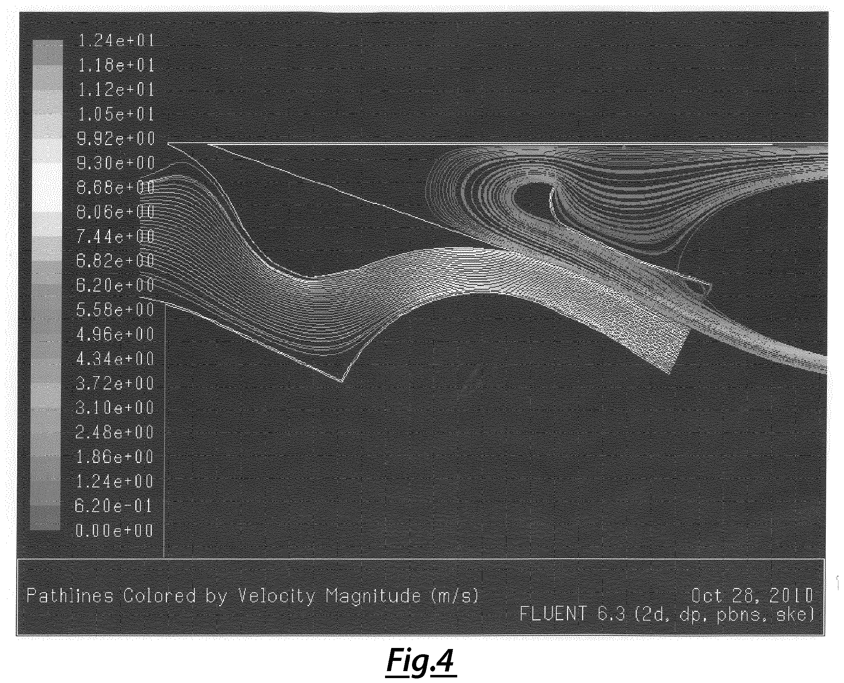

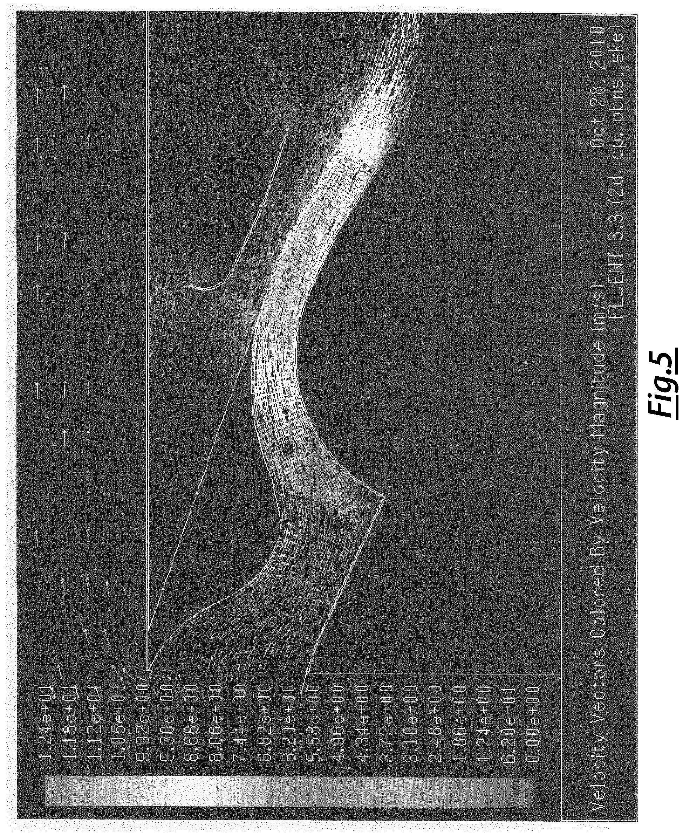

    figures 4 and 5 show test diagrams for solution of figures 1 and 2.

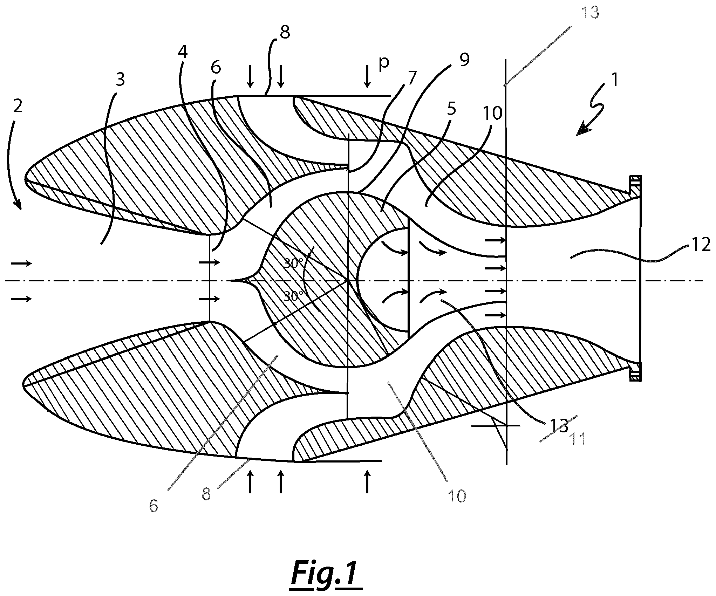

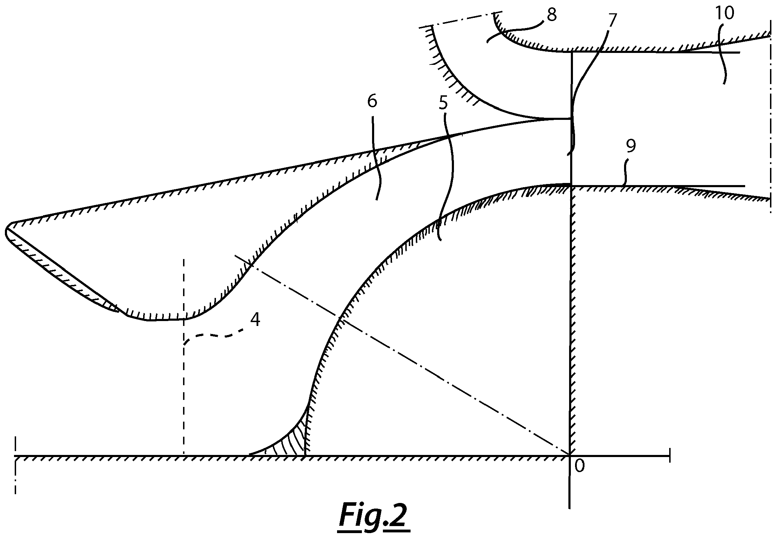

Making first reference to figures 1 and 2 of the enclosed drawings, it is schematically shown a housing, generically indicated by reference number 1, of a wind machine according to the invention.

Said housing 1 has an air intake 2, a first section 3 converging until section 4.

In correspondence of said section 4, flow is conveyed about a sphere-section (or cylindrical-section) element 5 (channel 6), up to section 7, where an auxiliary air intake 8 is provided.

After said section 7, element 5 has a linear running 9, before reproducing in channel 10 the same situation of channel 6.

In correspondence of said channel 10, a further auxiliary air intake 11 is provided, up to diverging channel 12, ending in correspondence of section 13, where Aeolian flow user (not shown) is provided.

Preliminarily, it must be pointed out that flow in correspondence of air intake 2 can be a natural flow, in this case wind machine according to the invention being suitably oriented with respect to the source, or an artificial source (not shown).

A specific description and scientific explanation will be given in the following with respect to different arrangements of the wind machine according to the invention, underlining particular advantages obtained. Basic principle of the solution according to the invention is valid for each one of the different arrangements, i.e. trying collecting highest amount of air that can be obtained from Aeolian field, at the velocity of the outer field, thus reducing pressure drop.

As already said, in case a natural flow is provided, air intake 2 is oriented perpendicular to the Aeolian field flow direction, due to the action of wind thrust on vertical rudder and on frame (not shown, since they are not subject matter of the present invention).

Flow enter within air intake 2 with a mass flow

$$A \times V\infty \times \varrho = Kg/sec$$

Wherein A is intake area ($m^2$), $V\infty$ is field velocity, $\varrho$ is air local density.

Air mass is compressed within converging section 3, according to Bernoulli formula $A_1/A_2 = R_1$

Wherein $A_1$ is efficient inlet area from converging section 3, $A_2$ is area of trailing edge area, $R_1$ is converging section 3 ratio.

In case pressure drop due to air friction along walls or to shape aerodynamic losses are not present, velocity at the trailing edge would be

$$V\infty \times R_1 = V_1.$$

Thus, in correspondence of section 4, it would be $V_1 > V\infty$.

The law of a fluid flow along a sphere or along a cylinder applies along channel 6, so that velocity in correspondence of section 7 is, always not considering pressure drop, $3/2\, v_1$ for sphere and $2v_1$ for cylinder.

As already said, in correspondence of section 7, an auxiliary air intake 8 is provided.

On the basis of Bernoulli law, a velocity V generates a negative pressure in flow motion,

$$\Delta p = \tfrac{1}{2} \varrho\, V^2.$$

Thus, communicating ($P_{atm}$) with flow at $V_1$, in correspondence of rectilinear section 9, a flow air is obtained

$$As \times V_1 = \Psi s$$

wherein As is area of channel communicating with auxiliary air intake, $V_1$ is velocity of inducing flow, $\Psi s$ is deriving flow maintained until when $\Delta p$ with respect to atmosphere exists.

It must be put into evidence that housing 1 of wind machine according to the invention can be comprised of a series of structure as described in the above.

It is observed that total flow air, at the end of the trailing edge of section 10 (or of series of converging sections) will have velocity $v_1$, and will enter within diffuser throat 12 with a velocity $V_1 \times R_2$, wherein $R_2$ is ratio of area $A_2/A_f = R_2$.

Taking into consideration pressure drop along ducts, in case at the end of the possible converging ducts, total of flows will be $\Psi_1 + \Psi_2 ..... \Psi_n = \Psi_{total}$, and velocity within the throat will be: $V_R = \Psi_r / A_f$, wherein $V_R$ is throat velocity acting on rotor, $A_r$ is diffuser throat area.

Always bearing in mind Betz equation, concerning power that can be obtained from a flow current, having velocity V, passing through an area $A_R$ of rotor

$$(P = \text{ß} \times \tfrac{1}{2} \varrho\, AV^3),$$

it is observed that two basic variable parameters are cubic current velocity, and rotor area.

Increasing velocity value from 5 m/sec to 20 m/sec, i.e. four times, parameter V varies from 125 to 8000.

Sole inconvenient of the solution according to the invention (compensated by advantages obtained) is that collection of Aeolian field is made within a housing, wherein air contacts walls and is delayed by friction with the same, due to "limit layer".

Wind machine according to the invention can also be realized by a field air intake having a not-circular section, or by a device multiplying inlet velocity.

In first case (not-circular field air intake), dynamic intake surface of wing flow is geometrically different with respect to the circular one (e.g. it can have a square, rectangular, octagonal, ecc. cross-section).

In the present case, since wind machine provides element 7, and its accelerating effect, it is worthwhile observing operation of the assembly, when it is modified flow inlet in portion of the housing aimed to contain Aeolian user transforming flow kinetic energy into mechanical energy.

In case a device having a vertical axis is used, it can be provided a device known as Panemone in spite of rotor.

It is essentially comprised of a disc rotating about an axis passing through its center. Wing portions with a suitable profile are fixed to the disc, having a longitudinal extension parallel to the rotation axis, the leading edge of which is hit by flow.

Operative principle of the solution according to the present invention will be shortly summarized in the following.

As it is well known, all possible motion of a wind flow can be decomposed into four elementary motions: rectilinear, vortex, well and doublet motion.

Each one of said motions can be represented by a mathematical equation (Laplace equation), which is a linear differential equation valid for not rotating elementary motions and incompressible fluid (a fluid is deemed incompressible up to a filed velocity lower than Mach 0.2 - 0.3).

Juxtaposition of two or more elementary motions represents all the possible motions.

Thus, motion obtained is described by equation solving elementary motion equation system, and said equation is a Laplace equation, obtained linearly adding coordinate of elementary motion equations.

Usually, coordinate expressing elementary motion equations are Cartesian coordinate or cylindrical coordinate, or spherical coordinate.

The solution suggested according to the present invention is described in the above, and thus an apparatus taking a set dynamic flow from Aeolian field , having a set flow rate (i.e. A x V∞), having one or more intake faced toward wind flow direction, processing flow(s) within housing, and using effects of elementary well and vortex motions, determines inlet from Aeolian field opening, even different with respect to dynamic inlet, of air current within the housing, generated by pressure difference (atmospheric pressure of outer field) and depression generated within a current provided with velocity V.

In fact, according to Bernoulli equation, total pressure within a fluid current is

$$P = P_1 + \tfrac{1}{2}\varrho v^2$$

wherein $P_1$ is residual static pressure and

$$\tfrac{1}{2}\varrho v^2$$

is current flow dynamic pressure.

For flows arriving from a natural Aeolian field, it can be said that $P_{atm}$=atmospheric pressure.

Thus:

$$\Delta p = P_{at} - P_1 = \tfrac{1}{2}\varrho v^2,$$

wherein $\Delta p$ is pressure drop acting within a conduct communicating atmosphere with a flow having velocity v.

If conduct from atmosphere to flow is within the flow, an outflow (source) occurs with velocity

$$V = \sqrt{2\Delta p/\varrho}$$

that will be maintained until when pressure drop will exist. $\Delta p = V$ (minus the viscosity losses).

If conduct is outside the flow, an opposite flow (well) will be obtained.

Said flows added to flows coming from dynamic intakes, sum up each other within a volume obtained in housing and indicated as "mixing chamber", wherein sum up of motions occurs, as demonstrated by Laplace equations.

Now, attention is drawn on third elementary motion, vortex, as described in International Patent Application PCT/IT2009/000348, having as title, "Improved Aeolian silos", of the same inventor of the present application.

Vortex motion occurs (according to the specification of the above application) within a suitable volume of housing wherein dynamic flow is sent to a circular chamber, wherein a vortex filament is realised which, on the basis of the Biot-Savart law, determines induction of a fluid flow perpendicular to the vortex circulation.

In this case too induced flows and dynamic flows are summed up within mixing chamber before reaching rotor.

Additional effect according to the present invention is that obtained alone (or in addition to those described) by deformation of velocity potential field (and pressure) that is obtained by putting a body having every shape within the bed of a rectilinear flow with velocity V.

Some theoretical considerations must be done on an accelerating "diverging - converging - diverging" conduct having virtual, rather than physical, walls in order to reduce pressure losses due to friction and shape coefficient. Said solution is particularly suitable for low velocity airborne flows.

Efficiency of a "flow intake - converging - static auxiliary intakes - diverging" geometry, in the theoretical situation of a hypothetical incompressible and not viscous fluid, is a direct function of Bernoulli theorem, since fluid inlet velocity to the dynamic intake (i.e. perpendicular to the inlet of converging throat according to convergence ratio.

Here, a static intake from atmosphere makes an supplemental flow entering in function of pressure difference between atmospheric pressure and static pressure of throat flow according to the Bernoulli formula:

$$P_{atm} = P_1 s + \tfrac{1}{2}\varrho V_1^2,$$

i.e.

$$P s = P_{atm} - \tfrac{1}{2}\varrho - V_1^2,$$

being $V_1 = V\infty \times R$, wherein R is convergence ratio between area of dynamic intake and throat area. Velocity of supplemental flow is:

$$V_1 = \sqrt{2\,\Delta p/\varrho} \qquad \Delta p = \tfrac{1}{2}\varrho V_1^2$$

thus

$$V_1 = \sqrt{2\,(\tfrac{1}{2}\varrho V_1^2)/\varrho} = \sqrt{V_1^2} \qquad V_1 = V s$$

The above is valid if inflow of supplemental flow does not cause an increase of flow pressure.

It is evident that a repeated geometry would cause a remarkable increase of final flow rate. Having a final device for transforming energy (according to Bernoulli) and always considering as null losses, it would be obtained a $V n = P_1 + P_2 + P n$ /final area much higher than $V\infty$, with a flow rate n/r times larger than that of the initial air intake.

Under the energy balance point of view, it would be obtained that final sum of inlet energy within flow from various intakes is:

$$\varrho A_d \times \tfrac{1}{2} V^3 + \varrho A_1 \times \tfrac{1}{2} V^3 + \varrho A_n \times \tfrac{1}{2} V^3 = Total$$

This is not valid in real world, since friction along walls and losses due to convergence within converging conducts determines a reduction of air velocity at the throat outlet for each diffuser, so that velocity of auxiliary flows, being a function of local pressure difference, remarkably lowers.

Notwithstanding the above, a set increase of flow rate and final velocity is obtained. From the above considerations, it is reasonable thinking to a system permitting fully exploiting possibilities offered by the above scheme, trying to reduce at most losses within conduct.

It has been observed that, if every body is placed within an Aeolian filed, e.g. a rectilinear stationary field having a velocity V, a field deformation will occur around said body, so that flow lines, deform their trajectory from rectilinear into curvilinear, going around the body.

Energy making flow lines curving is the one arriving to the fluid by shock of flow within stagnation zone on which flow lines hit.

Energy delivered is conferred to the surrounding flows, thus increasing their energetic level, thus pressure (on the basis of Bernoulli, if velocity is annulled, pressure increases), and a light negligible temperature increase occurs.

If local pressure increases, $\Delta p$ increases, and thus velocity with which air surrounding body flows beyond the body.

Stagnation point of the perturbation body thus behaves as a source, the motion of which overlaps with rectilinear motion of the arriving flow.

Resulting motion can be thus described as a juxtaposition of equation of two elementary motions: rectilinear and source motions.

Describing the two motions by spherical coordinates, using linear differential equations (Laplace equation), it is obtained that the resulting equation is another linear differential equation.

The above has been demonstrated, described and calculated by Rankine in his famous study of oval shape (Rankine Oval), comprised of a plurality of rectilinear, source, well, flows, said two flows originating from an axis parallel to the rectilinear flow, having the same force.

Rankine demonstrates that total flow obtained from 3 motions determines a separate volume, contained within Aeolian field, without dispersion outside resulting flow, as if it is enclosed within a rigid housing. The above means that losses are really low and are a function of the velocity gradient among line flows, said gradient being limited for curvilinear trajectories, and thus, not existing limit layer with velocity equal to 0, losses can be ignored.

In the above, it has been described that air inlet in the described geometry can be considered as a flow obtained from a "rectilinear" motion juxtaposed to a "source" motion. To realize Rankine geometry, it is necessary creating a well flow.

Said flow is the opposite of the source flow, with flow lines entering within well.

Flow of the rectilinear field, in its central trajectory, enters within the set area throat of a diverging conduct.

Taking first into consideration a diverging conduct with a length l and rectilinear generatrix inclined of an angle $\alpha < 7°$, with a monotonic increase of area, lacking friction and losses, air volume entering within a second passes through cone, behaving as a piston, but in view of the increase of area for every "x" path, causes a space:

$$dv = (dr/r)^2 \times \pi \, . \, dx,$$

Said volume must be filled in by a "dv" adding to standard flow rate $\pi R^2 \times Vr$ entering within diffuser throat, and this is possible only by a passage velocity increase.

Velocity increase within throat is only possible with an increase of pressure difference $\Delta p$ between inlet and throat sections.

Thus, intake of diffuser is well force, and juxtaposition of field rectilinear motion with well motion, closing Rankine oval.

Bearing in mind that Rankine oval behaves as if resulting flow between rectilinear field motion and source and well motions, is contained within a rigid housing, being negligible losses, said geometry behaves ad a virtual converging system.

The present invention has been described for illustrative, but not limitative purposes, according to its preferred embodiments, but it is understood that variations and/or modifications can be introduced by those skilled in the art without departing from its scope as defined in the enclosed claims.

### Claims

1. Wind machine with aerodynamic elements to concentrate and accelerate an Aeolian flow entering from outside, said machine providing a housing (1), a first section (3), an element (5) having a substantially spherical or cylindrical section, a channel (6), first and second auxiliary air intake (8), a further channel (10), a third auxiliary air intake (11), and a diverging channel (12), at the outlet of which a device exploiting said Aeolian flow is provided, said wind machine being **characterised in that**

    - said housing (1) has an air intake (2),

- said first section (3) converges up to said element (5),
- said channel (6) is provided downstream said first converging section (3) and touches said element (5),
- said element (5) has a substantially spherical or cylindrical section substantially up to its median line,
- said first and second auxiliary air intake (8) are provided at said median line of said element (5),
- said element (5) has a substantially linear portion (9) downstream from said first and second air intake (8),
- said further channel (10) substantially reproduces the profile of said channel (6), so that said flow is conveyed about said element (5),
- said third auxiliary air intake (11) is at said further channel (10).

2. Wind machine with aerodynamic elements to concentrate and accelerate an Aeolian flow entering from outside according to claim 1, **characterized in that** said Aeolian flow entering through said main air intake (2) is a natural flow, the wind machine being provided with means for orienteering with respect to the Aeolian flow direction.

3. Wind machine with aerodynamic elements to concentrate and accelerate an Aeolian flow entering from outside according to claim 1, **characterized in that** said Aeolian flow entering through said main air intake (2) is an artificial source.

4. Wind machine with aerodynamic elements to concentrate and accelerate an Aeolian flow entering from outside according to one of the preceding claims, **characterized in that** sequence of sections (4,7) and of auxiliary air intakes (8,11) between said first converging section (3) and said diverging section can be provided, in series, more than once.

5. Wind machine with aerodynamic elements to concentrate and accelerate an Aeolian flow entering from outside according to one of the preceding claims, **characterized in that** said device exploiting the Aeolian flow can be a device provided with blades, or another kind of wind device with a horizontal or vertical axis.

6. Wind machine with aerodynamic elements to concentrate and accelerate an Aeolian flow entering from outside according to one of the preceding claims, **characterized in that** it provides circular wings, in its front section, said wings having a suitable wing profile, with a positive or negative leading angle, causing a perturbation of "wind field", curving the flow lines.


**Patentansprüche**

1. Windmaschine mit aerodynamischen Elementen, um einen Windstrom, der von außen eintritt, zu konzentrieren und zu beschleunigen, wobei die Maschine ein Gehäuse (1), einen ersten Abschnitt (3), ein Element (5) mit einem im Wesentlichen sphärischen oder zylindrischen Abschnitt, einen Kanal (6), ersten und zweiten Hilfslufteinlass (8), einen weiteren Kanal (10), einen dritten Hilfslufteinlass (11) und einen divergierenden Kanal (12), bei dessen Auslass eine Vorrichtung, die den Windstrom nutzt, bereitgestellt ist, umfasst, wobei die Windmaschine **dadurch gekennzeichnet ist, dass**

- das Gehäuse (1) einen Lufteinlass (2) hat,
- der erste Abschnitt (3) zu dem Element (5) hin konvergiert,
- der Kanal (6) stromabwärts des ersten konvergierenden Abschnitts (3) bereitgestellt ist und das Element (5) berührt,
- das Element (5) einen im Wesentlichen sphärischen oder zylindrischen Abschnitt bis im Wesentlichen zu seiner Mittellinie hat,
- der erste und zweite Hilfslufteinlass (8) an der Mittellinie des Elements (5) bereitgestellt sind,
- das Element (5) einen im Wesentlichen linearen Abschnitt (9) stromabwärts des ersten und zweiten Lufteinlasses (8) hat,
- der weitere Kanal (10) im Wesentlichen das Profil des Kanals (6) wiedergibt, sodass der Strom um das Element (5) befördert wird,
- der Hilfslufteinlass (11) beim weiteren Kanal (10) ist.

2. Windmaschine mit aerodynamischen Elementen, um einen Windstrom, der von außen eintritt, zu konzentrieren und zu beschleunigen, nach Anspruch 1, **dadurch gekennzeichnet, dass** der Windstrom, der durch den Hauptlufteinlass (2) eintritt, ein natürlicher Strom ist, wobei die Windmaschine mit Mitteln zum Ausrichten in Bezug auf die Windstromrichtung bereitgestellt ist.

**3.** Windmaschine mit aerodynamischen Elementen, um einen Windstrom, der von außen eintritt, zu konzentrieren und zu beschleunigen, nach Anspruch 1, **dadurch gekennzeichnet, dass** der Windstrom, der durch den Hauptlufteinlass (2) eintritt, eine künstliche Quelle ist.

**4.** Windmaschine mit aerodynamischen Elementen, um einen Windstrom, der von außen eintritt, zu konzentrieren und zu beschleunigen, nach einem der vorstehenden Ansprüche, **dadurch gekennzeichnet, dass** eine Abfolge von Abschnitten (4, 7) und Hilfslufteinlässen (8, 11) zwischen dem ersten konvergierenden Abschnitt (3) und dem divergierenden Abschnitt in Serie mehr als einmal bereitgestellt sein kann.

**5.** Windmaschine mit aerodynamischen Elementen, um einen Windstrom, der von außen eintritt, zu konzentrieren und zu beschleunigen, nach einem der vorstehenden Ansprüche, **dadurch gekennzeichnet, dass** die Vorrichtung, die den Windstrom nutzt, eine Vorrichtung sein kann, die mit Blättern oder irgendeiner anderen Art von Windvorrichtung mit einer horizontalen oder vertikalen Achse bereitgestellt ist.

**6.** Windmaschine mit aerodynamischen Elementen, um einen Windstrom, der von außen eintritt, zu konzentrieren und zu beschleunigen, nach einem der vorstehenden Ansprüche, **dadurch gekennzeichnet, dass** sie kreisförmige Flügel in ihrem Vorderabschnitt bereitstellt, wobei die Flügel ein geeignetes Flügelprofil haben, mit einem positiven oder negativen Leitwinkel, der eine Verwirbelung eines "Windfelds" verursacht, die die Strömungslinien krümmt.

## Revendications

**1.** Éolienne à éléments aérodynamiques pour concentrer et accélérer un flux d'air entrant depuis l'extérieur, ladite machine comportant un carter (1), une première section (3), un élément (5) comprenant une section sensiblement sphérique ou cylindrique, un canal (6), une première et une deuxième entrée d'air auxiliaire (8), un autre canal (10), une troisième entrée d'air auxiliaire (11), et un canal évasé (12), à la sortie duquel un dispositif exploitant ledit flux d'air est prévu, ladite éolienne étant **caractérisée en ce que**

   - ledit carter (1) comprend une entrée d'air (2),
   - ladite première section (3) converge jusqu'audit élément (5),
   - ledit canal (6) est prévu en aval de ladite première section convergente (3) et touche ledit élément (5),
   - ledit élément (5) comprend une section sensiblement sphérique ou cylindrique sensiblement jusqu'à sa ligne médiane,
   - ladite première et ladite deuxième entrée d'air auxiliaire (8) sont prévues au niveau de ladite ligne médiane dudit élément (5),
   - ledit élément (5) comprend une partie sensiblement linéaire (9) en aval de ladite première et de ladite deuxième entrée d'air (8),
   - ledit autre canal (10) reproduit sensiblement le profil dudit canal (6), de sorte que ledit flux est transporté autour dudit élément (5),
   - ladite troisième entrée d'air auxiliaire (11) se situe au niveau dudit autre canal (10).

**2.** Éolienne à éléments aérodynamiques pour concentrer et accélérer un flux d'air entrant depuis l'extérieur selon la revendication 1, **caractérisée en ce que** ledit flux d'air entrant à travers ladite entrée d'air principale (2) est un flux naturel, l'éolienne étant dotée d'un moyen d'orientation par rapport à la direction du flux d'air.

**3.** Éolienne à éléments aérodynamiques pour concentrer et accélérer un flux d'air entrant depuis l'extérieur selon la revendication 1, **caractérisée en ce que** ledit flux d'air entrant à travers ladite entrée d'air principale (2) est une source artificielle.

**4.** Éolienne à éléments aérodynamiques pour concentrer et accélérer un flux d'air entrant depuis l'extérieur selon l'une des revendications précédentes, **caractérisée en ce que** la séquence de sections (4, 7) et d'entrées d'air auxiliaires (8, 11) entre ladite première section convergente (3) et ladite section divergente peut être prévue, en série, plus d'une fois.

**5.** Éolienne à éléments aérodynamiques pour concentrer et accélérer un flux d'air entrant depuis l'extérieur selon l'une des revendications précédentes, **caractérisée en ce que** ledit dispositif exploitant le flux d'air peut être un dispositif doté de pales, ou un autre type de dispositif éolien à axe horizontal ou vertical.

6. Éolienne à éléments aérodynamiques pour concentrer et accélérer un flux d'air entrant depuis l'extérieur selon l'une des revendications précédentes, **caractérisée en ce qu'**elle comporte des ailes circulaires, dans sa section avant, lesdites ailes comprenant un profil d'aile approprié, avec un angle avant positif ou négatif, entraînant une perturbation du « champ de vent », incurvant les lignes de flux.

**_Fig.1_**

*Fig.2*

*Fig.3*

Pathlines Colored by Velocity Magnitude (m/s)                    Oct 28, 2010
                                                    FLUENT 6.3 (2d, dp, pbns, ske)

_Fig.4_

Velocity Vectors Colored By Velocity Magnitude (m/s)          Oct 28, 2010
                                                    FLUENT 6.3 (2d, dp, pbns, ske)

**_Fig.5_**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070277501 A1

- IT 2009000348 W